# EUROPÄISCHE PATENTSCHRIFT

(11) **EP 2 848 416 B1**
(45) Veröffentlichungstag und Bekanntmachung des Hinweises auf die Patenterteilung: **28.09.2016**
(21) Anmeldenummer: 14182479.7
(22) Anmeldetag: 27.08.2014
(51) Int. Cl.: B41J 3/407

(54) **Transport für Packmittel sowie Vorrichtung zum Behandeln von Packmitteln mit einem solchen Transportsystem**
Transport for packaging, and device for handling packaging with such a transport system
Transport de matériau d'emballage et dispositif de traitement de matériaux d'emballage doté d'un tel système de transport

(30) Priorität: 16.09.2013 DE 102013110167
(43) Veröffentlichungstag der Anmeldung: 18.03.2015
(73) Patentinhaber: KHS GmbH, 44143 Dortmund (DE)
(72) Erfinder: Ehmer, Wilfried, 44227 Dortmund (DE); Koers, Sascha, 59192 Bergkamen (DE)

(56) Entgegenhaltungen:
- WO-A1-2004/110905
- DE-A1-102009 043 497
- DE-A1-102011 112 300

## Beschreibung

Die Erfindung bezieht sich auf ein Transportsystem gemäß Oberbegriff Patentanspruch 1.

Bedruckung von Packmitteln, wie Behälter, Becher, Dosen oder Flaschen ist bekannt. Dabei werden mehrere Farben nacheinander mittels berührungslos arbeitenden Druckköpfen appliziert (Ink Jet-Verfahren). Nach jedem einzelnen Druckfarbenauftrag erfolgt in der Regel ein so genanntes Pinnen, das ein Antrocknen oder Teilaushärten (UV-Tinte) darstellt.

Nach komplettem Tinten-/Farbauftrag erfolgt dann das so genannte Curing, das finale, vollständige Trocknen oder Aushärten der Tinte/Farbe. Dies erfolgt in der Regel mit einem höheren Energieeintrag und für eine längere Dauer als das Pinning.

Transportsysteme sind bekannt (DE 10 2009 043 497 A1). Eine Besonderheit dieser Transportsysteme besteht darin, dass die Packmittel während des gesamten Transportes vom Packmitteleinlauf bis an den Packmitlelauslauf an jeweils ein und derselben Halte- und Zentriereinheit (Puck) gehalten sind und die Halte- und Zentriereinheiten die Packmittel erst am Packmittelauslauf freigeben, von dem die Halte- und Zentriereinheiten dann auf einer Puck-Rückführ-Transportstrecke an den Packmitteleinlauf zurückbewegt werden.

Weiterhin ist den Merkmalen des Oberbegriffs des Anspruchs 1 aus der DE 10 2011 112 300 A1 bekannt, wobei die Packmittel wie vorgenannt während des gesamten Transportes vom Packmitteleinlauf bis an den Packmittelauslauf an jeweils ein und derselben Halte- und Zentriereinheit (Puck) gehalten werden, und wobei die Halte- und Zentriereinheit nach dem Entlassen der Packmittel nach oben verschoben wird und die Rücktransportstrecke oberhalb auf denselben Transport- und Behandlungsmitteln (hier Bedruckungssterne) erfolgt.

Eine andere Lösung zeigen die DE 10 2011 112 106 und DE 10 2091 112 281, bei welchen der Rücktransport der leeren Halte- und Zentriereinheiten auf derselben Ebene, wie die geladenen Halle- und Zentriereinheiten erfolgt, indem jede zweite Halteposition der Transport- und Behandlungsmitteln für den Rücktransport vorgesehen ist.

Nachteilig ist hierbei, dass die Transport- und Behandlungsmittel, also die Bedruckungsvorrichtungen/-sterne sehr groß werden, was neben dem Platzbedarf wirtschaftlich nachteilig ist.

Aufgabe der Erfindung ist es, ein Transportsystem der gattungsgemäßen Art aufzuzeigen, welches bei hoher Betriebssicherheit mit reduziertem konstruktivem Aufwand und in kompakter Bauweise realisierbar ist. Zur Lösung dieser Aufgabe ist ein Transportsystem entsprechend dem Patentanspruch 1 ausgebildet. Ein Verfahren zum Behandeln von Packmitteln ist Gegenstand des Patentanspruches 8.

Das erfindungsgemäße Transportsystem zeichnet sich dadurch aus, dass zumindest nur ein Teil der die Packmittel-Transportstrecke bildenden Transportelemente zugleich die Puck-Rückführ-Transportstrecke bilden, wobei die Curingeinheit immer einen Teil dieser Rückführungsstrecke bildet und insbesondere mindestens zwei Trocknungs- und Curingteilstrecken aufweist.

Hierdurch können die Anzahl der notwendigen Transportelemente und/oder der notwendigen Transportstrecken für den geschlossenen Puck-Umlauf bzw. für den geschlossenen Transportweg der Pucks und damit auch das Bauvolumen des Transportsystems insgesamt wesentlich reduziert werden bei maximaler Anzahl an Gleichteilen.

"Packmittel" sind im Sinne der Erfindung Verpackungen oder Behältnisse, die im Lebensmittelbereich und dabei speziell auch im Getränkebereich üblicherweise verwendet werden, und zwar insbesondere Behälter, wie z. B. Flaschen, Dosen, auch Weichverpackungen, beispielsweise solche hergestellt aus Karton und/oder Kunststofffolie und/oder Metallfolie.

Unter "Puck" ist im Sinne der Erfindung eine Halte-, Zentrier- und Ausrichteinheit für die Packmittel zu verstehen, an der das jeweilige Packmittel gehalten von dem Packmitteleinlauf an den Packmittelauslauf durch eine Packmittel-Transportstrecke des Transportsystems bewegt wird und welches hierbei bevorzugt auch eine gesteuerte Orientierung des jeweiligen Packmittels für dessen Behandlung bewirkt. Der Puck kann dabei einen motorischen Antrieb umfassen, oder selbst Teil eines motorischen Antriebs zum Rotieren des jeweiligen Packmittels um dessen Vertikalachse darstellen.

Die einzelnen Halte- und Zentriereinheiten sind dabei beispielsweise zumindest antriebsmäßig fest mit einem elektrischen Stellantrieb oder zumindest mit einem Funktionselement, beispielsweise mit einem Rotor eines solchen Stellantriebes verbunden, oder aber an den Transportelementen sind mit diesen mitbewegte Stellantriebe vorgesehen, die dann nach der Übergabe der jeweiligen Halte- und Zentriereinheit an diese angekuppelt werden, sodass mit den Stellantrieben dann eine Ausrichtung der Packmittel bzw. der Nulllage und/oder ein Drehen der Packmittel beim Bedrucken um ihre Achse erfolgen kann. Geeignete Inkrementalgeber, Sensoren und Erfassungs- und Datenverarbeitungsvorrichtungen zur Drehwinkelbestimmung bzw. Steuerung sind bekannt.

"Transportmäßig aneinander anschließende Transportelemente oder Transportsterne" bedeutet im Sinne der Erfindung Transportelemente oder Transportsterne, die so ausgebildet und angeordnet sind, dass sie an Übergabebereichen die Halte- und Zentriereinheiten (Pucks) von einem benachbarten in einer Transportrichtung vorausgehenden Transportelement aufnehmen, halten und an ein in Transportrichtung folgendes Transportelement weiterleiten.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei wird hinsichtlich der grundsätzlichen Lehre zum Transport von Packmitteln (Flaschen, Dosen) in Behandlungs-/Bedruckungsvorrichtungen und deren Behandlung/Bedruckung ausdrücklich auf die vorgenannten vier Schriften DE 10 2009 043 497 A1, DE 10 2011 112 300 A1, DE 10 2011 112 106 A1 und DE 10 2011 112 281 A1 der Anmelderin verwiesen, die ergänzend zum Verständnis hinzugezogen werden sollten.

Insbesondere wird eine Halte- und Zentriereinheit als Puck verwendet, bei der das Sekundärteil, in dem das Packmittel, die Flasche oder der Behälter gehalten wird, um eine vertikale Achse drehbar und antreibbar an oder in einem Primärteil gelagert, und weiterhin motorisch antreibbar ist. Hierbei kann in einer Ausführungsform, der bevorzugten, vorgesehen werden, dass das Sekundärteil den Rotor eines elektromagnetischen Direktantriebes bildet, und so das gesteuerte Ausrichten und/oder Drehen des jeweiligen Packmittels erfolgt. Hierfür wird vorzugsweise das Sekundärteil mit einer Permanentmagnetanordnung versehen, die mit einem Stator des elektromagnetischen Direktantriebes oder mit einer diesen Stator bildenden Elektromagnetanordnung zusammenwirkt.

Alternativ hierzu kann das Sekundärteil auch einen stufenlos regel- und steuerbaren elektrischen Motor, insbesondere einen Servomotor umfassen oder in einer Hauptkomponente aus einem solchen Motor bestehen. In diesem Fall umfasst das Primärteil in einer Hauptkomponente das Motorgehäuse bzw. besteht im Wesentlichen aus dem Motorgehäuse eines stufenlos regel- und steuerbaren Motors.

Da zu jedem Zeitpunkt die Winkelstellung des Rotors respektive des Packmittels sein muss, ist idealerweise am Sekundärteil, ggf. auch am Primärteil, wenigstens eine Kodierung für die Drehwinkellage vorgesehen, welche mit einem geeigneten Sensor oder Leseeinheit, insbesondere einem oder mehreren Inkremental-Sensoren an der jeweiligen Arbeitsposition zusammenwirkt. Weiterhin kann alternativ oder ergänzend das Primärteil relativ zur jeweiligen Behandlungsposition in seiner Drehwinkellage immer eindeutig bestimmt oder bestimmbar ausgeführt sein, indem eine formschlüssige Aufnahme, Zentriereinheit oder ein Kupplungselement vorgesehen ist, so dass nur die relative Drehwinkellage des Sekundärteils zum Primärteil durch einen Sensor, Leseeinheit, etc. erfassbar gestaltete sein muss. Die Lage relativ zum Drucksegment bzw. dem Druckkopf kann dann hieraus abgeleitet werden.

Bei der Bedruckung von leeren Packmitteln, insb. PET-, PEN-, PE- oder PP-Leerflaschen, was den Normalfall darstellt, sollte vorteilhafterweise das Packmittel unter leichtem Überdruck stehen. Hierzu wird an der Halte- und Zentriereinheit ein Konter- oder Gegenstück zu einem maschinen- oder drucksegmentseitigen Kupplungselement vorgesehen, das insbesondere in der Art einer Schnellkupplung ausgebildet ist. Hierüber kann ein dampf- oder gasförmiges Medium, z.B. Druckluft, durch eine innere Leitung, hier der hohle Innenraum der Halte- und Zentriereinheiten (Pucks), in das Packmittel geleitet werden. Der untere Auslass dieser inneren Leitung bildet idealerweise ein zentrales Zentrierelement/-konus. Hierfür ist mindestens eine Transport- und Behandlungseinheit, idealerweise die erste, mit einer Dampf- oder Gasquelle verbunden oder umfasst einen geeigneten Kompressor.

Vorteilhafterweise wird das Konterelement der Kupplung als Rückschlagventil ausgebildet oder ein Rückschlagventil ist in der inneren Leitung vorgesehen. Hierdurch kann nach dem Vorspannen mit einem dampf- und/oder gasförmigen Medium, z.B. Druckluft, dieser Druck über die gesamte Packmitteltransport- bzw. Druckstrecke im Packmittel erhalten werden.

Die Erfindung wird im Folgenden anhand der Figuren an einem Ausführungsbeispiel näher erläutert. Es zeigen:
Fig. 1 in schematischer Darstellung eine Draufsicht auf das Transportsystem einer Vorrichtung zum Behandeln von Packmitteln in Form von Flaschen gemäß der Erfindung;
Fig. 2 in schematischer Darstellung eine weitere Draufsicht auf ein alternatives Transportsystem einer Vorrichtung zum Behandeln von Packmitteln in Form von Flaschen gemäß der Erfindung;

Das in den Figuren allgemein mit 1 bezeichnete Transportsystem ist Bestandteil einer Vorrichtung zum Behandeln von Packmitteln 2 in Form von Behältern oder Flaschen. Speziell ist das Transportsystem 1 beispielsweise Bestandteil einer Vorrichtung zum Aufbringen wenigstens einer Ausstattung auf jedes Packmittel 2, beispielsweise zum vorzugsweise mehrfarbigen Bedrucken der Packmittel 2.

Die prinzipielle Arbeitsweise des Transportsystems 1 bzw. der dieses Transportsystem aufweisenden Vorrichtung lässt sich dahingehend beschreiben, dass die zu behandelnden Packmittel 2 an einem Packmitteleinlauf 3 zugeführt, dort durch eine nicht dargestellte Einrichtung auf einen erforderlichen Maschinenabstand gebracht und über einen den Packmitteleinlauf 3 bildenden Einlaufstern 4 an eine Packmittel-Transportportstrecke 5 übergeben werden, die bei der dargestellten Ausführungsform von drei rotorartig ausgeführten, umlaufend antreibbaren und transportmäßig aneinander anschließenden Transportelementen oder Transportsternen 6, 7 und 8 gebildet ist.

Auf der Packmittel-Transportstrecke 5 erfolgt das Behandeln der Packmittel 2, die hierfür mit den umlaufenden Transportelementen 6 - 8 an einer Vielzahl von nicht dargestellten Behandlungsstationen/-modulen vorbei bewegt werden, beispielsweise an Druckstationen oder Druckköpfen zum Aufbringen eines Mehrfarben-Druckes auf jedes Packmittel 2. Nach der Behandlung gelangen die Packmittel 2 über einen Auslaufstern 9 an einen Packmittelauslauf 10, über den die behandelten Packmittel 2 einer weiteren Verwendung und/oder Behandlung zugeführt werden. Die konkrete Transportstrecke 5.1 der Packmittel 2, also Weg der Packmittel 2 entlang der o.g. Transportelemente, ist dabei als Linie angedeutet.

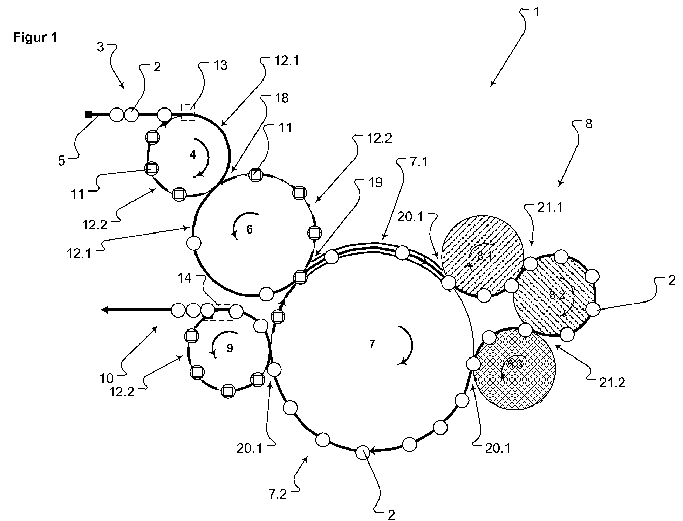

Der Einlaufstern 4, die Transportsterne 6 - 8 sowie der Auslaufstern sind jeweils um eine vertikale Maschinenachse umlaufend antreibbar, und zwar bei der für die Figur 1 gewählten Darstellung der Einlaufstern 4 im Uhrzeigersinn entsprechend dem Pfeil, der an den Einlaufstern 4 anschließende Transportstern 6 (Bedruckungsvorrichtung) im Gegenuhrzeigersinn entsprechend dem Pfeil, der an dem Transportstern 6 anschließende Transportstern 7 (Trockungs- und Curingvorrichtung) im Uhrzeigersinn entsprechend dem Pfeil, der an dem Transportstern 7 anschließende Transportstern 8 (8.1 bis 8.3) analog entsprechend den Pfeilen und der an den Transportstern 8 anschließende Auslaufstern 9.

Eine Besonderheit des Transportsystems 1 besteht darin, dass die Packmittel 2 am Packmitteleinlauf 3 in der Zusammenführungsstation 13, d.h. bei der Übergabe an den dortigen Einlaufstern 4 jeweils an ihrer Packmitteloberseite, Packmittelmündung oder Halsbereich von einer Packmittelhalte-, Zentrier- und Ausrichteinheit, d.h. von einer Halte- und Zentriereinheit 11 aufgenommen und an ein und derselben Halte- und Zentriereinheit 11 hängend gehalten durch das gesamte Transportsystem 1 von dem Packmitteleinlauf 3 bis an den Packmittelauslauf 10 bewegt werden. Erst am Packmittelauslauf 10, in der Trennstation 14 kommt jedes Packmittel 2 von der ihm zugeordneten Halte- und Zentriereinheit (Puck) 11 frei. Die leeren Halte- und Zentriereinheiten (Pucks) 11, d.h. die Halte- und Zentriereinheiten ohne Packmittel 2 werden über das Transportsystem 1 bzw. über eine Halte- und Zentriereinheiten-Rückführ-Transportstrecke an den Packmitteleinlauf 3 zurückbewegt.

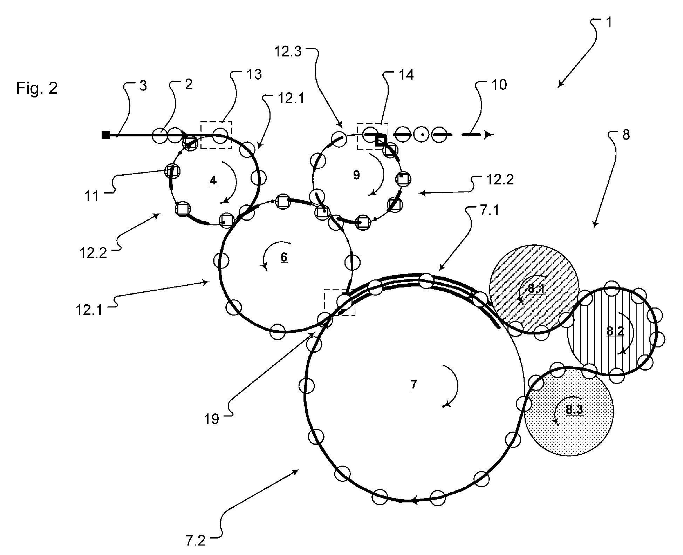

Die leeren Halte- und Zentriereinheiten (Pucks) 11 sind als Kreis mit einem Quadrat in der Mitte dargestellt. Halte- und Zentriereinheiten (Pucks) welche ein Packmittel 2 halten oder tragen sind nicht gesondert dargestellt. Diese werden auf der Teilstrecke 12.1 von der Zusammenführstation 13 bis Trennstation 14, in der Darstellung der Figuren 1 und 2 nicht von den Packmitteln 2 (Kreis mit weißer Füllung) unterschieden.

Entsprechend der Figuren 1 und 2 ergibt sich somit ein in sich geschlossener Transportweg 12 für die Halte- und Zentriereinheiten 11. Entlang der durchgezogen dargestellten Teilstrecke 12.1 von dem Einlaufstern 4 zum Auslaufstern 9 und strichpunktiert dargestellten Rückführ-Transportstrecke der Halte- und Zentriereinheiten- bildenden Teilstrecke 12.2 vom Auslaufstern 9, über den Trocknungs- und Curingstation 9, die Bedruckungsvorrichtung 9 zurück an den Einlaufstern 4.

Der gesamte Transportweg 12 verläuft bei der dargestellten Ausführungsform ausschließlich über den Einlaufstern 4, die mehreren Transportsterne 6 - 8 (Behandlungsvorrichtungen) und den Auslaufstern 9. Die Teilstrecke 12.1 entspricht dabei dem meanderartig mehrfach umgelenkten Packmittel-Transportweg 5, auf dem die an den Halte- und Zentriereinheiten 11 gehaltenen Packmittel 2 vom Packmitteleinlauf 3 an den Packmittelauslauf 10 transportiert werden und auf dem die Behandlung der durch die Halte- und Zentriereinheiten 11 ausgerichteten Packmittel 2, beispielsweise durch gesteuertes Drehen oder Schwenken der um ihre vertikale Packmittelachse zentrierten und ausgerichteten Packmittel 2 erfolgt. Die Teilstrecke 12.2 ist ebenfalls meanderartig mehrfach umgelenkt, allerdings entgegengesetzt zum Verlauf der Teilstrecke 12.1 und deutlich kürzer, denn diese umfasst nur Teilstrecken einer Teilzahl der Transportelemente (6, 7), die auch als Behandlungsvorrichtungen (Bedruckungsvorrichtungen) dienen. Im vorliegenden Fall ist das die Bedruckungsvorrichtung für die weiße Farbe und die Trocknungs- und Curingstation 9.

Der Einlaufstern 4, die Transportsterne 6 - 8 und der Auslaufstern 9 bilden somit Transportelemente zum Bewegen der Halte- und Zentriereinheiten 11 auf dem geschlossenen Transportweg 12 sowie auch zum Bewegen der an den Halte- und Zentriereinheiten gehaltenen Packmittel 3 auf der Teilstrecke 12.1. Bei der dargestellten Ausführungsform sind die Transportsterne 8.1, 8.2, 8.3 identisch. Die unterschiedlichen Füllmuster symbolisieren im Falle von Bedruckungsvorrichtungen (8.1. bis 8.3) die unterschiedlichen, nacheinander aufzutragenden Farben. Natürlich können mehr als drei Bedruckungsvorrichtungen vorgesehen werden.

Der Einlaufstern 4 und der Auslaufstern 9 sind bei der dargestellten Ausführungsform identisch ausgebildet und bestehen u.a. jeweils aus einem um die vertikale Achse umlaufend antreibbaren Rotor aus mehreren am Umfang des Rotors in gleichmäßigen Winkelabständen und im selben radialen Abstand von der Dreh- oder Maschinenachse angeordneten Aufnahmen, die wiederum jeweils mit geeigneten Halte-, Aufnahme- und Übergabeelementen oder -mitteln, beispielsweise in Form von Greifern, für die Halte- und Zentriereinheiten 11 versehen sind.

Dabei weist die Trocknungs- und Curingstation 7 zwei Trocknungs- und Curingsstrecken (7.1, 7.2) auf. Die erste Trocknungs- und Curingstrecke 7.1. schließt sich an den Übergabebereich 19 von der Bedruckungsvorrichtung 6 zur Trocknungs- und Curingstation 7 an. Die zweite Trockungs- und Curingstrecke 7.2 bildet eine gemeinsame Trocknungs- und Curingstrecke 7.2 für eine Mehrzahl, idealerweise alle anderen Bedruckungsvorrichtungen (8.1, 8.2, 8.3). Dabei wird natürlich auf die erste Drucktinte/-farbe final eingewirkt.

Die erste Bedruckungsvorrichtung 6 dient zur Applikation der Farbe, die einen besonderen Curing oder Trockungsaufwand erfordert. Dies ist bei UV-härtenden Tinten häufig die Druckfarbe Weiß, welche besonders aufwändig und lange getrocknet bzw. ausgehärtet werden muss, insb. wenn Titanoxyd als Inhaltsstoff vorliegt.

Auf diesem Wege kann eine möglichst große Anzahl von Behandlungs- bzw. Bedruckungsvorrichtungen (8.1.-8.3) gleichförmig und mit geringstmöglicher Baugröße gebildet werden. Nur die besonders aufwändige erste Bedruckungsvorrichtung 6 und die Trocknungs- und Curingvorrichtungen 7, auf welchen ohnehin längere Verweilzeiten erwünscht sind, werden baulich größer und mit Aufnahmen für die Rückführung der Halte- und Zentriereinheiten 11 ausgestattet. Vorteilhaft ist, dass dabei die Pinningzeit bzw. das Pinningerfordernis auf der ersten Bedruckungsvorrichtung 6 nicht vollständig abgebildet werden muss, da die erste Trocknungs- und Curingstrecke 7.1 als ergänzende Einwirkstrecke auch eine Steuermöglichkeit und einen Freiheitsgrad hierfür darstellt.

Die Transportstrecke, wie sie in Figur 2 dargestellt ist, entspricht in weiten Teilen der aus Figur 1. Wiederum verläuft entlang der durchgezogen dargestellten Teilstrecke 12.1 der Transport der Packmittel 2 mittels der Halte- und Zentriereinheiten 11 von dem Einlaufstern 4, über die Transport- und Behandlungsvorrichtung 7 zu den Behandlungsvorrichtungen 8.1-8.3 und wieder zurück zur Transport- und Behandlungsvorrichtung 7 auf deren Trocknungs- und Curingstrecke 7.2.

Dabei schließt sich an den Übergabebereich 19 eine Teilstrecke 12.3 an, auf welcher die Packmittel 2 noch vom Halte- und Zentriermittel 11 gehalten werden, aber auf welcher in der Regel keine Behandlung der Packmittel 2 mehr erfolgt.

Die Trocknungs- und Curingvorrichtung 7 dient in diesem Ausführungsfall nicht als Teilstrecke 12.2 zur Rückführung der leeren Halte- und Zentriereinheit 11. Diese Teilstrecke 12.2. verläuft kürzest möglich im Kurzschluss vom Auslaufstern 9 über die Behandlungs-/Bedruckungsvorrichtung 6 zum Einlaufstern 4, wo erneut die Beladung mit Packmitteln 2 erfolgen kann.

Somit weist von den Transport- und Behandlungsvorrichtungen 4, 6-9 im Falle einer Ausführung nach Figur 2 nur die Ein- und Auslaufsterne 4, 9 sowie die erste Behandlungs-/Bedruckungsvorrichtung 6 Aufnahmen für die Rückführung/-transport der leeren, unbeladenen Halte- und Zentriereinheiten 11 auf.

Der besondere Vorteil derartiger Anordnungen besteht darin, dass das Trocknen und Curing auf der Strecke 7.1. ergänzend zum ggf. unvollständigen oder fehlenden Pinning auf der Behandlungs-/Bedruckungsvorrichtung 6, dies in beliebiger Intensität und Energiemengen vorgenommen werden kann, ohne Rücksichtnahme auf Quer- und Streureflexionen, welche schnell zu unerwünschten Anhaftungen und Antrocknungen an fluidführenden Bauteilen insbesondere den Druckköpfen führen.

Weiterhin muss hinsichtlich von Wärme-, Strahlungs- oder sonstiger Emitter nicht Rücksicht auf den begrenzten Bauraum der Behandlungsvorrichtung 6 bzw. deren Behandlungsstationen oder -module genommen werden.

Die Erfindung wurde voranstehend an einem Ausführungsbeispiel beschrieben. Dabei ist die Ausführungsform nicht auf rotierende Sterne begrenzt. In analoger Anwendung können insb. die Behandlungs-/Bedruckungsvorrichtungen 6 und/oder 7 als ovale Transportstrecken ausgeführt sein in Form von Führungsschienen oder Endlosband/-kette, mit einer Vielzahl von Behandlungsstationen/-modulen, welche von einer endlos umlaufenden Kette oder einem Band angetrieben und/oder getragen werden.

Es versteht sich, dass Änderungen sowie Abwandlungen möglich sind, ohne das der der Erfindung zugrundeliegende Erfindungsgedanke verlassen wird.

### Bezugszeichen liste

- 1: Transportsystem
- 2: Packmittel
- 3: Packmitteleinlauf
- 4: Einlaufstern
- 5: Transportstrecke
- 6: umlaufend antreibbares Transportelement/-stern als Bedruckungsvorrichtung
- 7: Trocknungs- und Curingstation
- 7.1: Trocknungs- und Curingstrecke (erste)
- 7.2: Trocknungs- und Curingstrecke (zweite)
- 8: umlaufend antreibbare Transportelement/-stern als Bedruckungsvorrichtung
- 9: Auslaufstern
- 10: Packmittelauslauf
- 11: Halte- und Zentriereinheiten (Puck)
- 12: Transportweg
- 12.1, 12.2, 12.3: Teillänge des Transportweges 12
- 13: Zusammenführungsstation
- 14: Trennstation
- 18 - 22: Übergabebereich

## Patentansprüche

1. Transportsystem zum Transportieren von Packmitteln (2) von einem Packmitteleinlauf (3) an einem Packmittelauslauf (10), mit mehreren umlaufend antreibbaren Transportelementen (4, 6 - 8, 9), wobei ein Teil der Transportelemente (6, 7, 8.1-8.3) auch Behandlungselemente darstellen, bei welchen chemisch und/oder physikalisch auf die Oberfläche der Packmittel (2) eingewirkt wird, und die in einer Transportrichtung der Packmittel (2) aneinander anschließen und eine Packmittel-Transportstrecke (5) zwischen dem Packmitteleinlauf (3) und dem Packmittelauslauf (10) bilden, wobei die Packmittel-Transportstrecke (5) eine Teillänge eines in sich geschlossenen Transportweges (12) für eine Vielzahl von Halte- und Zentriereinheiten (11) ist, die für ein Fassen jeweils eines Packmittels (2) am Packmitteleinlauf (3) und für ein Mitführen des jeweiligen Packmittels (2) entlang der Packmittel-Transportstrecke (5) bis an den Packmittelauslauf (10) ausgebildet sind, sowie mit einer eine weitere Teillänge (12.2) des Transportweges (12) bildenden Puck-Rückführ-Transportstrecke zum Rückführen der Pucks (11) nach Freigabe des jeweiligen Packmittels (2) vom Packmittelauslauf (10) an den Packmitteleinlauf (1), wobei
die die Packmittel-Transportstrecke (5) bildende Teillänge (12.1) des Puck-Transportweges (12) und die Rückführ-Transportstrecke bildende Teillänge (12.2) des Puck-Transportweges (12) eine unterschiedliche Streckenlänge aufweisen, wobei die Packmittel-Transportstrecke (5) bildende Teillänge (12.1) und die Puck-Rückführ-Transportstrecke (12.2) Transportelemente (6, 7, 8.1-8.3) umfassen, die auch Behandlungs-/Bedruckungselemente darstellen, welche auch Behandlungs-/Bedruckungselemente darstellen, als die Teillänge (12.1), welche die Packmittel-Transportstrecke (5) des Pucktransportweges bzw. des Transportweges mittels der Halte- und Zentrierelemente bildet, **dadurch gekennzeichnet, dass** die die Packmittel-Transportstrecke (5) bildende Rückführ-Transportstrecke (12.2) eine geringe Anzahl von Transportelementen (6, 7) umfasst und dass das erste Bedruckungselement (6) mit einer Trocknungs- und Curingstation (7) zum Transport der Packmittel (2) verbunden ist, und wobei dieses mit mindestens einem weiteren Bedruckungselement (8.1, 8.2, 8.3) verbunden ist, und wobei die Trocknungs- und Curingstation (7) mindestens zwei Trockungs- und Curingteilstrecken (7.1, 7.2) aufweist.

2. Transportsystem nach Anspruch 1, **dadurch gekennzeichnet, dass** die Puck-Rückführ-Transportstrecke (12.2) als Transportelemente (6, 7) aus einem einzelnen Behandlungselement besteht bzw. hierauf verläuft und dieses ein Bedruckungselement für Packmittel ist.

3. Transportsystem nach einem der vorhergehenden Ansprüche, **dadurch gekennzeichnet, dass** die die Packmittel-Transportstrecke (5) bildende Teillänge (12.1) des Puck-Transportweges (12) und die die Puck-Rückführ-Transportstrecke bildende Teillänge (12.2) des Puck-Transportweges (12) auf derselben oder in vertikaler Richtung gegeneinander versetzten Transportebenen erfolgt.

4. Transportsystem nach einem der vorhergehenden Ansprüche, **dadurch gekennzeichnet, dass** die Transportelemente (4, 6 - 8, 9) Puckaufnahmen mit Mitteln zur Aufnahme, zum Halten sowie zur Weitergabe der Pucks (11) von und an benachbarte Transportelemente (4, 6 - 8, 9) aufweisen.

5. Transportsystem nach einem der vorhergehenden Ansprüche, **gekennzeichnet durch** ein erstes Transportelement (4) im Bereich des Packmitteleinlaufs zum Rückführen der Pucks (1) aus der der Puck-Rückführ-Transportstrecke entsprechenden Transportebene (TE2) in die der Packmittel-Transportstrecke (5) entsprechenden Transportebene (TE1) sowie **durch** ein zweites Transportelement (9) am Packmittelauslauf (10) zum Überführen der Pucks (11) aus der der Packmittel-Transportstrecke entsprechenden Transportebene (TE1) in die der Puck-Rückführ-Transportstrecke entsprechenden Transportebene (TE2).

6. Transportsystem nach Anspruch 4 oder 5, **dadurch gekennzeichnet, dass** das erste am Packmitteleinlauf (3) vorgesehene und/oder zweite am Packmittelauslauf (10) vorgesehene Transportelement als Einlaufstern (4, 9) mit mehreren Puckaufnahmen ausgebildet ist, die in einem Teilungsabstand am Umfang eines um eine vertikale Maschinenachse umlaufend antreibbaren Rotors (16) vorgesehen sind und synchron mit der Drehbewegung des Rotors (16) parallel zur Maschinenachse zwischen wenigstens einer unteren und einer oberen Transportebene (TE1, TE2) gesteuert bewegbar sind.

7. Transportsystem nach einem der vorhergehenden Ansprüche, **dadurch gekennzeichnet, dass** zwischen dem Packmitteleinlauf (3) und Packmittelauslauf (10) oder dem ersten und dem dritten Transportelement (4, 6) und/oder zwischen dem zweiten und dem dritten Transportelement (9, 8) jeweils zwei in Umlaufrichtung des ersten und zweiten Transportelementes (4, 9) aufeinanderfolgende Übergabebereiche (19, 20; 21, 22) gebildet sind.

8. Verfahren zum Behandeln, insbesondere Bedrucken von Packmitteln (Flaschen, Dosen, Becher und dergleichen), **dadurch gekennzeichnet, dass** ein Transportsystem nach einem der vorstehenden Ansprüche verwendet wird.

## Claims

1. Transport system for the transporting of packaging (2) from a packaging inlet (3) to a packaging outlet (10), with a plurality of transport elements (4, 6 - 8, 9) driven such as to circulate, wherein a part of the transport elements (6, 7, 8.1-8.3) also represent handling elements, at which chemical and/or physical effects are exerted on the surface of the packaging (2), and which connect to one another in a transport direction of the packaging (2) and form a packaging transport path (5) between the packaging inlet (3) and the packaging outlet (10), wherein the packaging transport path (5) is a part length of a closed transport path (12) for a plurality of holding and centring units (11), which are configured in each case for taking up a packaging means (2) at the packaging inlet (3) and for conveying the respective packaging (2) along the packaging transport path (5) as far as the packaging outlet (10), as well as with a puck return transport path, forming a further part length (12.2) of the transport path (12), for returning the pucks (11), after releasing the respective packaging (2), from the packaging outlet (10) to the packaging inlet (1), wherein
the part length (12.1) of the puck transport path (12), forming the packaging transport path (5), and the part length (12.2) of the puck transport path (12), forming the return transport path, exhibit different path lengths, wherein the part length (12.1) forming the packaging transport path (5) and the puck return transport path (12.2) comprise transport elements (6, 7, 8.1-8.3), which also represent handling-printing elements when the part length (12.1) forms the packaging transport path (5) of the puck transport path or the transport path by means of the holding and centring elements, **characterised in that**
the first printing element (6) is connected to a drying and curing station (7) for the transport of the packaging (2), and wherein this element is connected to a further printing element (8.1, 8.2, 8.3), and wherein the drying and curing station (7) comprises at least two drying and curing paths (7.1, 7.2).

2. Transport system according to claim 1, **characterised in that** the puck return transport path (12.2), consists, as transport elements (6, 7), of an individual handling element or runs on this element, and that this element is a printing element for packaging.

3. Transport system according to any one of the preceding claims, **characterised in that** the part length (12.1) of the puck transport path (12) forming the packaging transport path (5), and the part length (12.2) of the puck transport path (12) forming the puck return transport path are arranged on the same transport plane or on a transport plane offset against one another in the vertical direction.

4. Transport system according to any one of the preceding claims, **characterised in that** the transport elements (4, 6 - 8, 9) comprise puck receptacles with means for taking up, holding, and onward conveying of the pucks (11) from and to adjacent transport elements (4, 6 - 8, 9).

5. Transport system according to any one of the preceding claims, **characterised by** a first transport element (4) in the region of the packaging inlet, for returning the pucks (1) from the transport plane (TE2), corresponding to the puck return transport path, into the transport plane (TE1) corresponding to the packaging transport path (5), as well as by a second transport element (9) at the packaging outlet (10) for the transfer of the pucks (11) out of the transport plane (TE1), corresponding to the package transport path, into the transport plane (TE2) corresponding to the puck return transport path.

6. Transport system according to claim 4 or 5, **characterised in that** the first transport element provided at the packaging inlet (3) and/or the second transport element provided at the packaging outlet (10) are configured as inlet stars (4, 9) with a plurality of puck receptacles, these being provided at separation spacing intervals around the circumference of a rotor (16), driven such as to rotate around a vertical machine axis, and can be moved in a controlled manner in synchrony with the rotational movement of the rotor (16) parallel to the machine axis between at least one lower and one upper transport plane (TE1, TE2).

7. Transport system according to any one of the preceding claims, **characterised in that** two transfer regions (19, 20; 21, 22), in each case following one another in the circumferential direction of the first and second transport elements (4, 9), are formed between the packaging inlet (3) and packaging outlet (10), or between the first and the third transport element (4, 6), and/or between the second and third transport element (9, 8).

8. Method for the handling, in particular printing, of packaging means (bottles, cans, beakers and the like), **characterised in that** a transport system according to any one of the preceding claims is used.

## Revendications

1. Système de transport pour transporter des emballages (2) d'une entrée d'emballages (3) à une sortie d'emballages (10), comprenant plusieurs éléments de transport (4, 6 - 8, 9) pouvant être entraînés en rotation, dans lequel une partie des éléments de transport (6, 7, 8.1 - 8.3) constituent également des éléments de traitement, dans lesquels la surface des emballages (2) est soumise à une action chimique et/ou physique et qui se suivent les uns les autres dans une direction de transport des emballages (2) et qui forment un parcours de transport d'emballages (5) entre l'entrée d'emballages (3) et la sortie d'emballages (10), dans lequel le parcours de transport d'emballages (5) est une longueur partielle d'une voie de transport (12) fermée sur elle pour une pluralité d'unités de maintien et de centrage (11), qui sont réalisées en vue de saisir un emballage (2) au niveau respectif le long du parcours de transport d'emballages (5) jusqu'à la sortie d'emballages (10), et comprenant également un parcours de transport de retour à palet formant une autre longueur partielle (12.2) de la voie de transport (12), pour ramener les palets (11) après la libération de l'emballage (2) de la sortie d'emballages (10) à l'entrée d'emballages (1), dans lequel
la longueur partielle (12.1), formant le parcours de transport d'emballages (5), de la voie de transport de palets (12) et la longueur partielle (12.2), formant le parcours de transport de retour, de la voie de transport de palets (12) présentent une longueur de parcours différente, dans lequel la longueur partielle (12.1) formant le parcours de transport d'emballages (5) et le parcours de transport de retour de palets (12.2) comprennent des éléments de transport (6, 7, 8.1 - 8.3), qui constituent également des éléments de traitement/d'impression, qui constituent également des éléments de traitement/d'impression, par rapport à la longueur partielle (12.1), qui forme le parcours de transport d'emballages (5) de la voie de transport de palets ou de la voie de transport au moyen des éléments de maintien et de centrage,
**caractérisé en ce que** le parcours de transport de retour (12.2) formant le parcours de transport d'emballages (5) comprend un nombre inférieur d'éléments de transport (6, 7), et **en ce que** le premier élément d'impression (6) est relié à une station de séchage et de traitement (7) pour le transport des emballages (2), et dans lequel celui-ci est relié à au moins un autre élément d'impression (8.1, 8.2, 8.3) et dans lequel la station de séchage et de traitement (7) présente au moins deux parcours partiels de séchage et de traitement (7.1, 7.2).

2. Système de transport selon la revendication 1, **caractérisé en ce que** le parcours de transport de retour de palets (12.2) est constitué en tant qu'éléments de transport (6, 7) d'un unique élément de traitement ou s'étend dessus, et **en ce que** ce dernier est un élément d'impression pour des emballages.

3. Système de transport selon l'une quelconque des revendications précédentes, **caractérisé en ce que** la longueur partielle (12.1), formant le parcours de transport d'emballages (5), de la voie de transport de palets (12) et la longueur partielle (12.2), formant le parcours de transport de retour de palets, de la voie de transport de palets (12) se situent sur le même niveau de transport ou sur des niveaux de transport décalés les uns par rapport aux autres dans une direction verticale.

4. Système de transport selon l'une quelconque des revendications précédentes, **caractérisé en ce que** les éléments de transport (4, 6 - 8, 9) présentent des logements de palet pourvus de moyens pour recevoir, maintenir et transmettre les palets (11) depuis et à des éléments de transport (4, 6 - 8, 9) adjacents.

5. Système de transport selon l'une quelconque des revendications précédentes, **caractérisé par** un premier élément de transport (4) dans la zone de l'entrée d'emballages pour ramener les palets (1) du plan de transport (TE2) correspondant au parcours de transport de retour de palet dans le plan de transport (TE1) correspondant au parcours de transport d'emballages (5) ainsi que par un deuxième élément de transport (9) au niveau de la sortie d'emballages (10) pour transférer les palets (11) du plan de transport (TE1) correspondant au parcours de transport d'emballage dans le plan de transport (TE2) correspondant au parcours de transport de retour de palet.

6. Système de transport selon la revendication 4 ou 5, **caractérisé en ce que** le premier élément de transport prévu au niveau de l'entrée d'emballages (3) et/ou le deuxième élément de transport prévu au niveau de la sortie d'emballages (10) sont réalisés sous la forme d'étoiles d'entrée (4, 9) pourvues de plusieurs logements de palet, qui sont prévus, à une distance donnée de répartition, au niveau de la périphérie d'un rotor (16) pouvant être entraîné en rotation autour d'un axe de machine vertical et qui peuvent être déplacés de manière commandée, de manière synchrone avec le déplacement de rotation du rotor (16), de manière parallèle par rapport à l'axe de machine entre au moins un plan de transport inférieur et un plan de transport supérieur (TE1, TE2).

7. Système de transport selon l'une quelconque des revendications précédentes, **caractérisé en ce que** sont formées, entre l'entrée d'emballages (3) et la sortie d'emballages (10) ou entre le premier et le troisième élément de transport (4, 6) et/ou entre le deuxième et le troisième élément de transport (9, 8), respectivement deux zones de remise (19, 20 ; 21, 22) se suivant l'une l'autre dans la direction périphérique du premier et du deuxième élément de transport (4, 9).

8. Procédé pour traiter, en particulier à imprimer des emballages (bouteilles, canettes, pots et similaires), **caractérisé en ce qu'**un système de transport selon l'une quelconque des revendications précédentes est utilisé.
